(19) Europäisches Patentamt
European Patent Office
Office européen des brevets

(11) **EP 0 776 287 B1**

(12) **EUROPÄISCHE PATENTSCHRIFT**

(45) Veröffentlichungstag und Bekanntmachung des Hinweises auf die Patenterteilung:
**07.10.1998 Patentblatt 1998/41**

(21) Anmeldenummer: 95928466.2

(22) Anmeldetag: **26.07.1995**

(51) Int. Cl.$^6$: **B60T 8/00**

(86) Internationale Anmeldenummer:
**PCT/EP95/02950**

(87) Internationale Veröffentlichungsnummer:
**WO 96/06764 (07.03.1996 Gazette 1996/11)**

(54) **VERFAHREN ZUR ERMITTLUNG DER QUERBESCHLEUNIGUNG EINES FAHRZEUGS**

PROCESS FOR FINDING THE TRANSVERSE ACCELERATION OF A VEHICLE

PROCEDE DE DETERMINATION DE L'ACCELERATION TRANSVERSALE D'UN VEHICULE

(84) Benannte Vertragsstaaten:
**DE FR GB**

(30) Priorität: **27.08.1994 DE 4430458**

(43) Veröffentlichungstag der Anmeldung:
**04.06.1997 Patentblatt 1997/23**

(73) Patentinhaber:
**ITT Automotive Europe GmbH**
**60488 Frankfurt (DE)**

(72) Erfinder:
• **BURKHARD, Dieter**
**D-67714 Waldfischbach-Burgalben (DE)**

• **DORNSEIFF, Manfred**
**D-59969 Bromskirchen (DE)**
• **SCHWARTZ, Jean-Claude**
**D-60594 Frankfurt am Main (DE)**
• **VOLZ, Alexander**
**D-63303 Dreieich (DE)**

(74) Vertreter:
**Blum, Klaus-Dieter, Dipl.-Ing.**
**c/o ITT Automotive Europe GmbH,**
**Guerickestrasse 7**
**60488 Frankfurt (DE)**

(56) Entgegenhaltungen:
**DE-A- 4 128 639**      **DE-A- 4 140 239**
**DE-A- 4 230 481**      **GB-A- 2 266 957**

**Beschreibung**

Die Erfindung bezieht sich auf ein Verfahren zur Ermittlung der Querbeschleunigung eines Fahrzeugs, insbesondere als eine Eingangsgröße für ein elektronisches Fahrzeug-Regelungssystem, z.B. für ein Antiblockiersystem (ABS), eine Antriebsschlupfregelung (ASR), eine elektronische Regelung der Bremskraftverteilung (EBV), für eine aktive Fahrwerksregelung oder für eine Fahrstabilitätsregelung (FSR).

Es leuchtet ein, daß sich in manchen Situationen durch Einbeziehung der Querbeschleunigung in die Berechnung der Regelgrößen derartiger Regelungssysteme die Regelqualität erheblich verbessern läßt. Aus der Querbeschleunigung ist frühzeitig eine Gefahr für die Fahrstabilität festzustellen. Eine Kurvenfahrt und ihre Richtung ist ebenfalls sofort aus der Querbeschleunigung erkennbar. Manche Regelungssysteme, wie FSR, sind ohne Querbeschleunigungsmessung gar nicht denkbar.

Ferner ermöglicht eine Kenntnis der momentanen Querbeschleunigung eine Überwachung anderer Komponenten und Sensoren eines Regelungssystems. Beispielsweise läßt sich die Funktion eines gesonderten Querbeschleunigungsaufnehmers oder eines Lenkwinkelgebers durch die errechnete Querbeschleunigung überprüfen. Handelt es sich um ein Regelungssystem, bei dem die unterschiedlichen Abrollumfänge der einzelnen Räder durch Korrekturfaktoren erfaßt und berücksichtigt werden, kann durch Messung der Querbeschleunigung diese Korrekturfaktorermittlung überwacht werden.

Es ist z.B. aus dem Dokument DE-A-4 128 639 ein Verfahren zur Ermittlung der Querbeschleunigung eines Kraftfahrzeugs bekannt. Es wird beschrieben, wie die Querbeschleunigung des Kraftfahrzeugs ohne Beschleunigungssensoren und zwar mittels Kraftsensoren ermittelt werden kann.

Der Erfindung liegt daher die Aufgabe zugrunde, ein Verfahren zu entwickeln, mit dem sich auf einfache Weise, mit geringem Aufwand und mit hoher Zuverlässigkeit die Querbeschleunigung eines Fahrzeugs ermitteln läßt.

Es hat sich herausgestellt, daß diese Aufgabe mit dem im beigefügten Anspruch 1 beschriebenen Verfahren gelöst werden kann.

Nach einem vorteilhaften Ausführungsbeispiel der Erfindung wird in der Filter- und Anpassungsschaltung mit Hilfe eines Tiefpasses ein Langzeit-Mittelwert der Differenz zwischen dem Langzeit- und dem Kurzzeit-Korrekturfaktor des jeweiligen Rades gebildet. In Abhängigkeit von dem Langzeit-Mittelwert der übrigen Räder wird ein Teilwert dieses Langzeit-Mittelwertes zur Korrektur des Langzeit-Korrekturfaktors ausgewertet.

Erfindungsgemäß wird also die Querbeschleunigung des Fahrzeugs ausschließlich aus den Informationen errechnet, welche die Radsensoren über das Drehverhalten der einzelnen Fahrzeugräder liefern. Handelt es sich, wie heute üblich, um ein Regelungssystem, bei dem die Berechnungen und Datenverarbeitung durch programmgesteuerte Schaltkreise, wie Mikroprozessoren, Mikrocontroller oder dergl. durchgeführt werden, ist für die erfindungsgemäße Querbeschleunigungsberechnung keinerlei zusätzliche Hardware erforderlich. Der Mehraufwand beschränkt sich auf eine Erweiterung des Programms und evtl. der zugehörigen Speicher.

Die Berechnung der Querbeschleunigung bei Anwendung des erfindungsgemäßen Verfahrens ist im Vergleich zu herkömmlichen Systemen, die spezielle Sensoren, z.B. Querbeschleunigungssensoren und/oder Lenkwinkelgeber usw., benutzen, außerordentlich genau, weil die Berechnung auf der Ermittlung der Radgeschwindigkeitsunterschiede unter Berücksichtigung der Kurzzeit- und Langzeit-Korrekturfaktoren beruht.

Weitere Einzelheiten der Erfindung gehen aus der folgenden Beschreibung von Ausführungsbeispielen anhand der beigefügten Abbildungen hervor.

Es zeigen

Fig. 1    in schematisch vereinfachter Block- bzw. Prinzipdarstellung eine Schaltungsanordnung zur Ausführung des erfindungsgemäßen Verfahrens und

Fig. 2    in gleicher Darstellungsweise wie Fig. 1 weitere Einzelheiten einer Schaltungsanordnung zur Ermittlung des Kurzzeit- und Langzeit-Korrekturfaktors gemäß der Schaltungsanordnung nach Fig. 1.

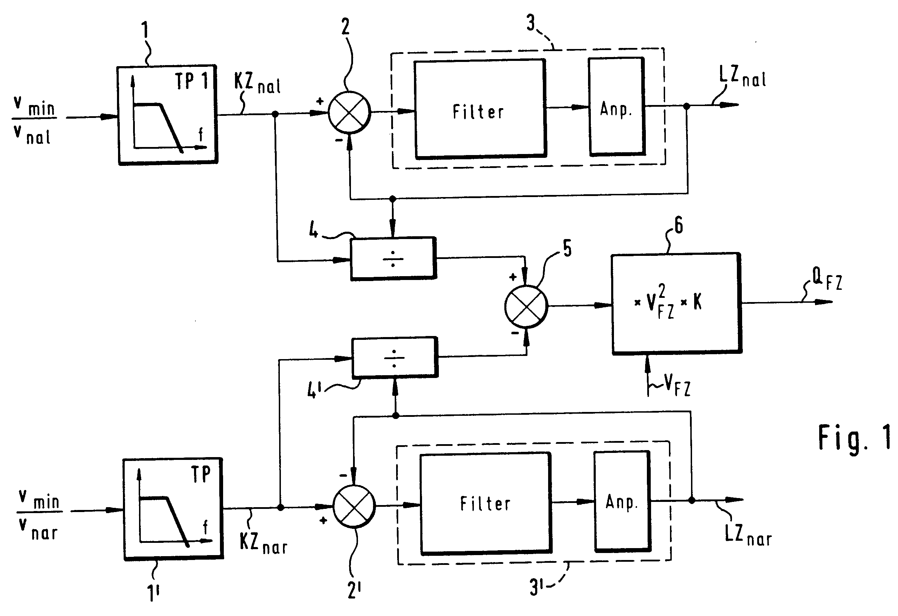

Zur Veranschaulichung des erfindungsgemäßen Verfahrens dient die Schaltungsanordnung nach Fig. 1. Das Verfahren setzt die Ermittlung von Korrekturfaktoren voraus, die ein Maß sind für die unterschiedlichen Abrollumfänge der einzelnen Fahrzeugreifen. Für eine exakte Blockierschutz- oder Anfahrschlupfregelung (ABS oder ASR), insbesonders für eine elektronische Regelung der Bremskraftverteilung (EBV) und auch für andere Regelungssysteme werden diese Korrekturfaktoren ohnehin benötigt.

Grundlage für die Berechnung der Querbeschleunigung $Q_{FZ}$ bildet der Raddrehzahlunterschied der nicht angetriebenen Achse. Zunächst wird die Eingangsgröße normiert. Es wird hier als Eingangsgröße der Quotient aus der augenblicklich geringsten Radgeschwindigkeit $v_{min}$ und der Radgeschwindigkeit eines nicht angetriebenen Rades $v_{na}$ gebildet. Der obere Schaltungszweig gilt für das nicht angetriebene linke Rad mit der Geschwindigkeit $v_{nal}$, der zweite Schaltungszweig für das rechte nicht angetriebene Rad mit der Geschwindigkeit $v_{nar}$.

Eingangsgrößen sind also die Quotienten $v_{min}/v_{nal}$ und $_{min}/v_{nar}$. Mit Hilfe eines Tiefpasses 1 bzw. 1' wird aus der jeweiligen Eingangsgröße $v_{min}/v_{nal}$ bzw. $v_{min}/v_{nar}$ ein Kurzzeit-Korrekturfaktor $KZ_{nal}$ bzw. $KZ_{nar}$ gebildet (da beide Schaltungszweige identisch aufgebaut sind, wird hier im folgenden nur noch der obere Schaltungszweig beschrieben).

Im Ausführungsbeispiel, auf den sich Fig. 1 bezieht, wird ein digitales Filter bzw. ein digitaler Tiefpaß (TP1) verwendet, der bei einer Taktfrequenz von z.B. 7 ms über jeweils 16 loops, also über etwa 100 ms (genau: 112 ms), einen Mittelwert des Eingangssignals $v_{min}/v_{nal}$ berechnet. Das Ausgangssignal dieses Tiefpasses 1 stellt den Kurzzeit-Korrekturfaktor dar

$$KZ_{nal} = \frac{1}{N}\sum_{i=1}^{N} \frac{C^* v_{min\,i}}{v_{nal\,i}}$$

(natürlich gilt die entsprechende Formel auch für den Korrekturfaktor $KZ_{nar}$). In dieser Formel bedeuten

$KZ_{nal}$ =  Mittelwert des Kurzzeit-Korrekturfaktors des nicht angetriebenen linken Rades,
$N$ =  Anzahl der Loops bzw. Zyklen, über die der Mittelwert gebildet wird
$v_{min}$ =  momentan niedrigste Radgeschwindigkeit
$v_{nal}$ =  momentane Geschwindigkeit des nicht angtriebenen linken Rades
$C$ =  Konstante

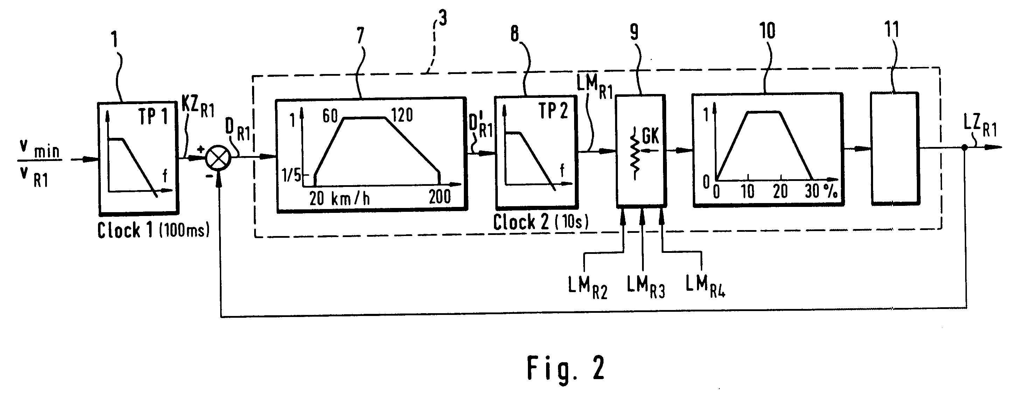

In einem Vergleicher und Differenzbilder 2 wird die Abweichung oder Differenz zwischen einem Langzeit-Korrekturfaktor, hier der Korrekturfaktor $LZ_{nal}$ des nicht angetriebenen linken Rades, und dem Kurzzeit-Korrekturfaktor $KZ_{nal}$ ermittelt. Dieser Langzeit-Korrekturfaktor $LZ_{nal}$ wird hier mit einer Filter- und Anpassungsschaltung 3 aus dem Ausgangssignal ($D_{na\,l}$) des Vergleichers und Differenzbilders 2 gewonnen. Einzelheiten der Schaltung 3 werden nachfolgend anhand der Fig. 2 erläutert.

In einem Quotientenbilder 4 wird der Quotient aus dem Langzeit- und Kurzzeit-Korrekturfaktor des jeweiligen Rades gebildet. "4" gilt wiederum für das nicht angetriebene linke Rad, der Quotientenbilder 4' ist in entsprechender Weise für das nicht angetriebene rechte Rad zuständig. In einem Differenzbilder 5 wird danach die Differenz zwischen den beiden Quotienten KZ/LZ des linken und rechten nicht angetriebenen Rades errechnet. Schließlich wird in einem Schaltblock 6 die Differenz der beiden Quotienten mit dem Quadrat der momentanen Fahrzeuggeschwindigkeit oder Fahrzeugreferenzgeschwindigkeit und außerdem mit einem konstanten Faktor K multipliziert. Am Ausgang des Multiplikators 6 steht das die Querbeschleunigung des Fahrzeugs wiedergebende Signal $Q_{FZ}$ zur Verfügung. Die Querbeschleunigung $Q_Z$ wurde folglich mit Hilfe der in Fig. 1 dargestellte Schaltung - durch Hardware oder durch Programmablauf - nach der Beziehung

$$Q_{FZ} = \left(\left(\frac{KZ}{LZ}\right)_{nal} - \left(\frac{KZ}{LZ}\right)_{nar}\right)^* V_{FZ}^2 {}^* K$$

ermittelt. Die Konstante K setzt sich aus einer von der Fahrzeuggeschwindigkeit oder Fahrzeugreferenzgeschwindigkeit abhängigen Konstanten k1, die im vorliegenden Fall als "1" angenommen wurde, ferner aus einer Konstanten k2, die die Einheiten der einzelnen Rechengrößen berücksichtigt und im vorliegenden Fall einen Wert in der Größenordnung von $10^5$ annahm, und aus der Spurweite SpW nach der Beziehung

$$K = k1/(k2 \times SpW)$$

zusammen. In der Praxis ist es auch möglich, durch Plausibilitätsbetrachtungen bzw. in Abhängigkeit von den physikalisch möglichen Werten Grenzwerte für die Querbeschleunigung $Q_{FZ}$ vorzugeben und in Abhängigkeit von diesen Grenzwerten die K-Faktoren erforderlichenfalls zu korrigieren. Die Querbeschleunigung kann aus physikalischen Gründen maximal einen Wert von "1 g" ("g" ist die Erdbeschleunigung) erreichen.

Fig. 2 zeigt Einzelheiten der Filter- und Anpassungsschaltung 3 nach Fig. 1. Der Index "R1" deutet an, daß dieser Schaltzweig für das Rad Nr. 1 gilt.

Das die Differenz zwischen dem Langzeit- und dem Kurzzeit-Korrekturfaktor des Rades 1 wiedergebende Signal $D_{R1}$ wird in dem dargestellten Ausführungsbeispiel zunächst mit Hilfe eines Bandpasses 7 bewertet bzw. in Abhängigkeit von der Fahrzeuggeschwindigkeit gewichtet. Der Bandpaß 7 läßt in einem mittleren Geschwindigkeitsbereich, der hier zwischen 60 km/h und 120 km/h liegt, das Differenzsignal $D_{R1}$ in voller Höhe passieren, während unterhalb einer unteren Geschwindigkeitsschwelle von 20 km/h und oberhalb einer oberen Geschwindigkeitsschwelle von 200 km/h eine sehr hohe Dämpfung gegeben ist. Wie symbolisch im Bandpaß 7 angedeutet ist, nimmt die Signaldämpfung im Bereich zwischen 20 km/h und 60 km/h linear ab und im Bereich zwischen 120 km/h und 200 km/h linear zu.

Das Ausgangssignal $D'_{R1}$ des Bandpasses 7, nämlich das gewichtete Differenzsignal $D_{R1}$, wird in einem digitalen Tiefpaß 8 (TP2) weiterverarbeitet. Es wird ein Langzeit-Mittelwert nach der Beziehung

$$LM_{R1} = \frac{1}{M} \sum_{i=N}^{M*N} f(D'_{R1})_i$$

gebildet, mit

$LM_{R1} =$ Langzeit-Mittelwert des Rades 1
$=$ Mittelwert der gewichteten Abweichung $(D'_{R1})$ des Kurzzeit- von dem Langzeitkorrekturfaktor des Rades 1
$M =$ Anzahl der Summierintervalle N.

Im vorliegenden Beispiel wird in Intervallen von ca. 10 Sekunden jeweils ein Langzeit-Mittelwert $LM_{R1}$ gebildet.

Eine Dämpfungsschaltung 9 bewirkt, daß nur ein Teil des Langzeit-Mittelwertes $LM_{R1}$ weitergeleitet wird. Wie groß dieser Teil ist, hängt u.a. von sogen. Kurvengewichtungsfaktoren GK ab, die unter Berücksichtigung der Langzeit-Mittelwerte der übrigen Räder R2,R3 und R4 mit Hilfe der Dämpfungsschaltung 9 ermittelt und ausgewertet werden. Durch diagonalen, seitenweisen und achsweisen Vergleich der Langzeit-Mittelwerte der einzelnen Räder läßt sich eine zweckmäßige Größe des Gewichtungsfaktors GK ermitteln.

Schließlich wird noch in einem anschließenden Bandpaß 10 radindividuell die Übernahme des Ausgangssignals der Dämpfungsschaltung 9 auf den Langzeit-Korrekturfaktor $LZ_{R1}$ begrenzt. Um die Auswirkung eines Überdrehen des Rades auf den Langzeit-Korrekturfaktor abzuschwächen, wird hier das Ausgangssignal der Dämpfungsschaltung 9, wenn diese Größe zwischen 0 und 10% liegt, vollständig übernommen, wenn sie zwischen 10 und 20% liegt, auf 10% begrenzt und, wenn sie zwischen 20 und 30% liegt, zu 10 bis 0% übernommen. Dieser Kurvenverlauf, der die Übernahme wiedergibt, ist in dem Bandpaß 10 symbolisch angedeutet.

Das Ausgangssignal des Bandpasses 10 wird in einer Anpassungsschaltung 11 zur Korrektur des Langzeit-Korrekturfaktors $LZ_{R1}$ herangezogen, der schließlich von dem Ausgang der Schaltung 11 zu dem Vergleicher und Differenzbilder 2 zurückgeführt wird. Der Langzeit-Korrekturfaktor wird für jedes Rad in der vorstehenden, für das Rad 1 geltenden Funktionsweise gebildet.

**Patentansprüche**

1. Verfahren zur Ermittlung der Querbeschleunigung eines Fahrzeugs, insbesondere als eine Eingangsgröße für ein elektronisches Fahrzeug-Regelungssystem, dadurch **gekennzeichnet**,

   - daß die Querbeschleunigung ($Q_{FZ}$) des Fahrzeugs auf Basis der Ausgangssignale von Radsensoren, die das Drehverhalten der einzelnen Fahrzeugräder wiedergeben, unter Berücksichtigung von Korrekturfaktoren, die die Unterschiede der Reifenabrollumfänge erfassen, ermittelt wird, indem
   - zumindest für die nicht angetriebenen Fahrzeugräder Kurzzeit-Korrekturfaktoren ($KZ_{nal}, KZ_{na\,r}$) und Langzeit-Korrekturfaktor ($LZ_{na\,l}, LZ_{na\,r}$) gebildet werden,
   - daß die Differenz ($D_{R1}$) zwischen dem Langzeit-Korrekturfaktor ($LZ_{na}$) und dem Kurzzeit-Korrekturfaktor ($KZ_{na}$) des jeweiligen nicht angetriebenen Rades ermittelt und in einer Filter- und Anpassungsschaltung (3,3') ausgewertet wird,
   - daß der Langzeit-Korrekturfaktor ($LZ_{na}$) in Abhängigkeit von dem in der Filter- und Anpassungsschaltung (3,3') gewonnenen Signal korrigiert wird,
   - daß der Quotient aus Kurzzeit- ($KZ_{na}$) und Langzeit-Korrekturfaktor ($LZ_{na}$) des jeweiligen Rades gebildet wird,
   - daß die Differenz zwischen dem aus dem Kurzzeit- und Langzeit-Korrekturfaktor ermittelten Quotienten der beiden nicht angetriebenen Räder gebildet und
   - daß aus diesen Quotienten die Querbeschleunigung ($Q_{FZ}$) nach der Beziehung

$$Q_{FZ} = \left( \left( \frac{KZ}{LZ} \right)_{nal} - \left( \frac{KZ}{LZ} \right)_{nar} \right) * V_{FZ}^2 * K$$

gebildet wird, mit

$$Q_{FZ} \quad = \quad \text{Querbeschleunigung des Fahrzeugs,}$$

$$\left(\frac{KZ}{LZ}\right)_{nal} \quad = \quad \text{Quotient aus Kurzzeit- und Langzeitkorrekturfaktor des } \underline{n}\text{icht } \underline{a}\text{ngetriebenen } \underline{l}\text{inken Rades,}$$

$$\left(\frac{KZ}{LZ}\right)_{nar} \quad = \quad \text{Quotient aus Kurzzeit- und Langzeitkorrekturfaktor des } \underline{n}\text{icht } \underline{a}\text{ngetriebenen } \underline{r}\text{echten Rades,}$$

$$V_{FZ} \quad = \quad \text{Fahrzeug- oder Fahrzeugreferenzgeschwindigkeit,}$$

$$K \quad = \quad \text{k1/(k2 x SpW); k1,k2 sind Konstanten,}$$

$$SpW \quad = \quad \text{Spurweite des Fahrzeugs.}$$

2. Verfahren nach Anspruch 1, dadurch **gekennzeichnet**, daß in der Filter- und Anpassungsschaltung (3,3') mit Hilfe eines Tiefpasses (8) ein Langzeitmittelwert ($LM_{R1}$) der Differenz ($D_{R1}$) zwischen dem Langzeit-Korrekturfaktor ($LZ_{R1}$) und dem Kurzzeit-Korrekturfaktor ($KZ_{R1}$) des jeweiligen Rades gebildet wird und daß in Abhängigkeit von dem Langzeit-Mittelwert ($LM_{R2,3,4}$) der übrigen Räder ein Teilwert des Langzeit-Mittelwerts ($LM_{R1}$) zur Korrektur des Langzeit-Korrekturfaktors ($LZ_{R1}$) ausgewertet wird.

## Claims

1. Method of determining the transverse acceleration of a vehicle, in particular as an input quantity for an electronic vehicle control system,
   **characterized** in that

   - the transverse acceleration ($Q_{FZ}$) of the vehicle is determined on the basis of the output signals of wheel sensors representing the rotational behavior of the individual vehicle wheels, in consideration of correction factors which determine the differences of the tire tread circumferences, by
   - producing short-time correction factors ($KZ_{nal}$, $KZ_{na\,r}$) and long-time correction factors ($LZ_{nal}$, $LZ_{na\,r}$) at least for the non-driven vehicle wheels,
   - in that the difference ($D_{R1}$) between the long-time correction factor ($LZ_{na}$) and the short-time correction factor ($KZ_{na}$) of the respective non-driven wheel is determined and evaluated in a filtering and adapting circuit (3,3'),
   - in that the long-time correction factor ($LZ_{na}$) is corrected as a function of the signal produced in the filtering and adapting circuit (3,3'),
   - in that the quotient of the short-time correction factor ($KZ_{na}$) and the long-time correction factor ($LZ_{na}$) of the respective wheel is produced,
   - in that the difference between the quotient produced from the short-time and long-time correction factors of the two non-driven wheels is produced, and
   - in that the transverse acceleration ($Q_{FZ}$) is produced from these quotients according to the relation

   $$Q_{FZ} = \left(\left(\frac{KZ}{LZ}\right)_{nal} - \left(\frac{KZ}{LZ}\right)_{nar}\right) * V_{FZ}^2 * K$$

   wherein

$Q_{FZ}$     is the transverse acceleration of the vehicle,

$\left(\dfrac{KZ}{LZ}\right)_{nal}$ is the quotient of the short-time correction factor and the long-time correction factor of the non-driven left wheel,

$\left(\dfrac{KZ}{LZ}\right)_{nar}$ is the quotient of the short-time correction factor and the long-time correction factor of the non-driven right wheel,

$V_{FZ}$     is the vehicle speed or vehicle reference speed,

K     is k1(k2 x SpW); k1,k2 are constants,

SpW     is the tire tread width of the vehicle.

**2.** Method as claimed in claim 1,
**characterized** in that a long-time average value ($LM_{R1}$) of the difference ($D_{R1}$) between the long-time correction factor ($LZ_{R1}$) and the short-time correction factor ($KZ_{R1}$) of the respective wheel is produced in the filtering and adapting circuit (3,3') by a low-pass filter (8), and in that a partial value of the long-time average value ($LM_{R1}$) is evaluated for the correction of the long-time correction factor ($LZ_{R1}$) as a function of the long-time average value ($LM_{R2,3,4}$) of the other wheels.

**Revendications**

**1.** Procédé de détermination de l'accélération transversale d'un véhicule, notamment en tant que grandeur d'entrée pour un système de régulation électronique de véhicule, caractérisé

- en ce que l'accélération transversale ($Q_{FZ}$) du véhicule est déterminée sur la base des signaux de sortie de capteurs de roue, qui représentent le comportement en rotation des différentes roues de véhicule, en tenant compte de facteurs de correction qui représentent les différences des circonférences déroulées des pneumatiques,
- des facteurs de correction à court terme ($KZ_{nal}$, $KZ_{nar}$) et des facteurs de correction à long terme ($LZ_{nal}$, $LZ_{nar}$) étant formés au moins pour les roues de véhicule non motrices,
- en ce que la différence ($D_{R1}$) entre le facteur de correction à long terme ($LZ_{na}$) et le facteur de correction à court terme ($KZ_{na}$) de la roue non motrice chaque fois considérée est déterminée et est exploitée dans un circuit de filtre et d'adaptation (3, 3'),
- en ce que le facteur de correction à long terme ($LZ_{na}$) est corrigé en fonction du signal obtenu dans le circuit de filtre et d'adaptation (3, 3'),
- en ce que le quotient du facteur de correction à court terme ($KZ_{na}$) et du facteur de correction à long terme ($LZ_{na}$) de la roue chaque fois considérée est formé,
- en ce que la différence entre les quotients des deux roues non motrices déterminés à partir du facteur de correction à court terme et du facteur de correction à long terme est formée et
- en ce qu'à partir de ces quotients, l'accélération transversale ($Q_{FZ}$) est formée conformément à la relation

$$QFZ = [(KZ/LZ)_{nal} - (KZ/LZ)_{nar}] * V_{FZ}^{2} * K$$

avec

QFZ = accélération transversale du véhicule,

$(KZ/LZ)_{nal}$ = quotient du facteur de correction à court terme et du facteur de correction à long terme de la roue non motrice gauche,

$(KZ/LZ)_{nar}$ = quotient du facteur de correction à court terme et du facteur de correction à long terme de la roue non motrice droite,

$V_{FZ}$= vitesse de véhicule ou vitesse de référence de véhicule,

K = k1/(k2 x SpW) ; k1, k2 sont des constantes, SpW = voie du véhicule.

2. Procédé suivant la revendication 1, caractérisé en ce que, dans le circuit de filtre et d'adaptation (3, 3'), une valeur moyenne à long terme $(LM_{R1})$ de la différence $(D_{R1})$ entre le facteur de correction à long terme $(LZ_{R1})$ et le facteur de correction à court terme $(KZ_{R1})$ de la roue chaque fois considérée est formée au moyen d'un filtre passe-bas (8) et en ce qu'en fonction de la valeur moyenne à long terme $(LM_{R2,3,4})$ des autres roues, une valeur partielle de la valeur moyenne à long terme $(LZ_{R1})$ est exploitée pour la correction du facteur de correction à long terme $(LZ_{R1})$.

Fig. 1

Fig. 2

EP 0 776 287 B1